# EUROPÄISCHE PATENTANMELDUNG

(11) **EP 3 117 956 A1**
(43) Veröffentlichungstag der Anmeldung: **18.01.2017**
(21) Anmeldenummer: 15177210.0
(22) Anmeldetag: 17.07.2015
(51) Int. Cl.: B23Q 11/00, G01F 1/56

(54) **HANDWERKZEUGMASCHINE UND STEUERUNGSVERFAHREN DAMIT**

(71) Anmelder: HILTI Aktiengesellschaft, 9494 Schaan (LI)
(72) Erfinder: Königbauer, Egon, 82223 Eichenau (DE); Appel, Hans, 81377 Muenchen (DE)
(74) Vertreter: Hilti Aktiengesellschaft Corporate Intellectual Property

(57) **Zusammenfassung**

Ein Saugmodul 2 für eine Handwerkzeugmaschine 1 hat ein motorgetriebenes Lüfterrad 17, einen Ansaugkanal 21 zum Ansaugen von staubbeladener Luft und einen Sammelbehälter 23 für Staub. Ein Durchflusssensor 24 hat eine aus Kunststoff gebildete Sensorfläche 25, welche in dem Ansaugkanal 21 angeordnet ist, ein der Sensorfläche 25 zugewandtes Elektrofeldmeter 26 zum Bestimmen der elektro-statische Feldstärke an der Sensorfläche 25, und eine Auswertungseinheit 27 zum Bestimmen eines Durchflussmenge von staubbeladener Luft basierend auf der bestimmten elektro-statische Feldstärke.

## Beschreibung

### GEBIET DER ERFINDUNG

Die vorliegende Erfindung betrifft ein Saugmodul für eine Handwerkzeugmaschine.

Ein Saugmodul ist aus der EP 2599584 A1 bekannt. Das Saugmodul hat einen Sammelbehälter für Staub und ein motorgetriebenes Lüfterrad, welches staubbeladene Luft von einem Ansaugstutzen zu dem Sammelbehälter fördert. Das Saugmodul verdeckt sowohl den Bohrer als auch das Bohrloch, wodurch für den Anwender Störungen des Bohrbetriebs nur schwer erkennbar sind.

### OFFENBARUNG DER ERFINDUNG

Das erfindungsgemäße Saugmodul für eine Handwerkzeugmaschine hat ein motorgetriebenes Lüfterrad, einen Ansaugkanal zum Ansaugen von staubbeladener Luft und einen Sammelbehälter für Staub. Ein Durchflusssensor hat eine aus Kunststoff gebildete Sensorfläche, welche in dem Ansaugkanal angeordnet ist, ein der Sensorfläche zugewandtes Elektrofeldmeter zum Bestimmen der elektro-statische Feldstärke an der Sensorfläche, und eine Auswertungseinheit zum Bestimmen eines Durchflussmenge von staubbeladener Luft basierend auf der bestimmten elektro-statische Feldstärke. Beim ordnungsgemäßen Bohren fällt eine Mindestmenge von staubbeladener Luft pro Zeiteinheit an. Ist die aktuelle Durchflussmenge geringer, weist dies auf ein mögliches Problem hin. Der Anwender, das Saugmodul oder die Handwerkzeugmaschine können unter Berücksichtigung der Durchflussmenge oder ihrer Änderungen einem Fehlverhalten vorbeugen.

### KURZE BESCHREIBUNG DER FIGUREN

Die nachfolgende Beschreibung erläutert die Erfindung anhand von exemplarischen Ausführungsformen und Figuren. In den Figuren zeigen:

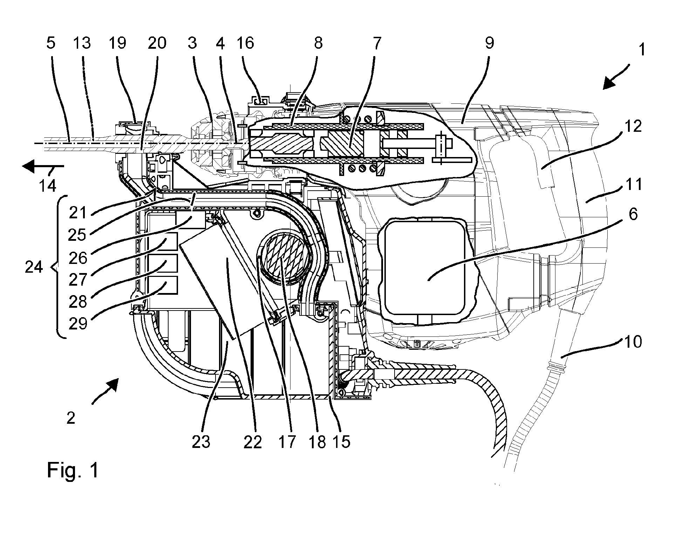

Fig. 1 einen Bohrhammer mit einem Saugmodul

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

Fig. 1 zeigt einen Bohrhammer **1** mit einem aufgesetzten Saugmodul **2.** Der Bohrhammer **1** hat einen Werkzeughalter **3,** in welchen ein Schaftende **4** eines Werkzeug, z.B. eines des Hohlbohrers **5,** eingesetzt werden kann. Einen primären Antrieb des Bohrhammers **1** bildet ein Motor **6,** welcher ein pneumatisches Schlagwerk **7** und eine Abtriebswelle **8** antreibt. Der Motor **6,** das pneumatische Schlagwerk **7** und die Abtriebswelle **8** sind in einem Maschinengehäuse **9** angeordnet. Ein Batteriepaket oder eine Netzleitung **10** versorgt den Motor **6** mit Strom. Ein Anwender kann den Bohrhammer **1** mittels eines Handgriffs **11** führen und mittels eines Systemschalters **12** den Bohrhammer **1** in Betrieb nehmen. Im Betrieb dreht der Bohrhammer **1** den Bohrer **5** kontinuierlich um eine Arbeitsachse **13** und kann dabei den Bohrer **5** in Schlagrichtung **14** längs der Arbeitsachse **13** in einen Untergrund schlagen.

Das Saugmodul **2** saugt das von dem Hohlbohrer **5** erzeugte Bohrgut auf. Der Hohlbohrer **5** hat anstelle einer Transportwendel zum Fördern des Bohrguts aus einem Bohrloch einen hohlen Schaft, durch welchen das Bohrgut per Luftstrom angesaugt wird. Der Luftstrom wird durch das Saugmodul **2** erzeugt.

Das Saugmodul **2** hat ein Modulgehäuse **15,** das an dem Maschinengehäuse **9** des Bohrhammers **1** befestigbar ist. Beispielsweise weist das Maschinengehäuse **9** eine Manschette **16** auf, welche über einen Hals nahe dem Werkzeughalter **3** aufgeschoben werden kann. Der Anwender kann das Saugmodul **2** zusammen und mittelbar durch den Bohrhammer **1** führen. Das Saugmodul **2** hat ein Lüfterrad **17,** welches durch einen Elektromotor **18** angetrieben ist. Das Lüfterrad **17** saugt einen Luftstrom an. Der Luftstrom tritt an einem Ansaugstutzen **19** in das Saugmodul **2** ein. Der Ansaugstutzen **19** umschließt ringförmig eine Austrittsöffnung **20** des Hohlbohrers **5.** Ein Ansaugkanal **21** führt den Luftstrom von dem Ansaugstutzen **19** zu einem Staubfilter **22** und einem Sammelbehälter **23.** Der in der Luft enthaltene Staub wird an dem Staubfilter **22** abgeschieden und fällt in den Sammelbehälter **23.** Das Lüfterrad **17** befindet sich vorzugsweise stromabwärts von dem Staubfilter **22,** so dass das Lüfterrad **17** nur mit staubfreier oder zumindest staubarmer Luft in Kontakt kommt. Das Saugmodul **2** hat stromabwärts des Lüfterrads **17** eine Ausblasöffnung.

Der Hohlbohrer **5** kann bei einem großen Aufkommen von Bohrgut verstopfen. Das Saugmodul **2** warnt den Anwender vor Anwender, wenn ein Verstopfen aufgetreten ist oder wenn ein Verstopfen zu erwartet wird. Ein Hinweis für das Verstopfen des Hohlbohrers **5** ist beispielsweise ein rascher Abfall des Staubgehalts in dem Luftstrom. Bei einem freien Hohlbohrer **5** saugt das Saugmodul **2** einen staubbeladenen Luftstrom aus dem Hohlbohrer **5** und zusätzlich einen staubfreien Luftstrom aus der Umgebung an. Das Verhältnis der Luftströme kann durch die Abdichtung des Hohlbohrers **5** in dem Ansaugstutzen **19** festgelegt werden. Wenn der Hohlbohrer **5** verstopft, verringert sich der staubbeladene Luftstrom während der staubfreie Luftstrom unbeeinflusst ist oder sogar größer wird.

Das Saugmodul 2 hat einen Durchflusssensor **24** zum Bestimmen der Staubmenge in dem Luftstrom. Der Durchflusssensor **24** hat eine Sensorfläche **25** aus Kunststoff. Die Sensorfläche **25** kann beispielsweise durch die Innenseite **20** des Ansaugkanals **21** gebildet sein. Alternativ kann ein Plättchen aus Kunststoff in dem Ansaugkanal **21** angeordnet sein. Das Plättchen ist vorzugsweise längs dem Luftstrom angeordnet, damit die Staubteilchen an dem Plättchen entlangströmen können. Die Sensorfläche **25** kann aus dem gleichen Kunststoff wie der Rest des Ansaugkanals sein, vorzugsweise besteht die Sensorfläche **25** jedoch aus einem anderen Kunststoff wie Polyethylen oder Polytetrafluorethylen.

Der Durchflusssensor **24** hat ein Elektrofeldmeter **26.** Das Elektrofeldmeter **26** misst die (Feld-) Stärke des elektro-statische Feldes an der Sensorfläche **25.** Eine beispielhafte Implementierung eines Elektrofeldmeters **26** beinhaltet eine mikromechanische Feder, die gegenüber einer Referenzplatte elektrisch geladen ist. Die Auslenkung der Feder gegenüber der Referenzplatte ist ein Maß der elektrischen Felder in der Umgebung, das elektrostatische Feld der Sensorfläche **25** erhöht oder verringert die Auslenkung, je nach Polarität und Orientierung des Elektrofeldmeters **26.** Andere Bauweisen für Elektrofeldmeter sind bekannt und können ebenfalls eingesetzt werden. Das Elektrofeldmeter **26** ist der Sensorfläche **25** zugewandt angeordnet, vorzugsweise in unmittelbarer Nähe. Das Elektrofeldmeter **26** kann innerhalb des Ansaugkanals **21** oder außerhalb des Ansaugkanals **21** angeordnet sein.

Eine Auswertungseinheit **27** des Durchflusssensors **24** wertet die gemessene Feldstärke aus. Das elektro-statische Feld wird durch einen triboelektrischen Effekt erzeugt. Die Staubkörner werden durch die Reibung an der Sensorfläche **25** ionisiert und laden dadurch die Sensorfläche **25** auf. Die bevorzugten Kunststoffe Polyethylen und Polytetrafluorethylen erweisen sich als besonders stark ionisierend. Luftfeuchtigkeit und anders bedingte Kriechströme entladen die Sensorfläche **25.** Bei einem ausreichend staubhaltigen Luftstrom kann die Ladung der Sensorfläche **25** und das von der Ladung ausgehende elektro-statische Feld von dem Elektrofeldmeter **26** erfasst werden.

Die Auswertungseinheit **27** ermittelt basierend auf der gemessenen Feldstärke die Durchflussmenge des Staubs in dem Luftstrom. Ein entsprechendes Messsignal kann von der Auswertungseinheit **27** an eine Anzeige **28** ausgegeben werden, welche dem Anwender den Staubgehalt anzeigt. Die Anzeige kann beispielsweise die Durchflussmenge als repräsentative Zahl oder symbolisch mit einer Balkenanzeige anzeigen.

Die Auswertungseinheit **27** kann auch eine Warneinrichtung **29** triggern. Die Warneinrichtung **29** überwacht fortlaufend die Durchflussmenge und ermittelt eine Änderungsrate des Staubgehalts über die Zeit. Falls die Durchflussmenge sich schneller als mit einer ersten Änderungsrate verringert, wird ein Warnsignal ausgegeben. Die erste Änderungsrate beschreibt den Abfall der Durchflussmenge beim Verstopfen des Hohlbohrers **5.** Die erste Änderungsrate wird in Versuchen ermittelt und ist in einem Speicher in der Warneinrichtung **29** hinterlegt. Die Warneinrichtung **29** kann dem Anwender optische oder akustisch das Verstopfen des Hohlbohrers **5** anzeigen und/oder den Bohrhammer **1** veranlassen, den bohrenden Betrieb einzustellen.

In der Auswertungseinheit **27** kann eine zweite Änderungsrate hinterlegt sein, welche betragsmäßig größer als die erste Änderungsrate ist. Die zweite Änderungsrate beschreibt das Herausziehen des Hohlbohrers **5** aus dem Bohrloch. Der Hohlbohrer **5** erzeugt kein weiteres Bohrgut, weshalb der Staubgehalt abfällt. Da das Saugmodul **2** im Gegensatz zu dem verstopften Hohlbohrer **5** mehr Luft ansaugen kann, fällt der Staubgehalt in der Luft schneller ab.

## Patentansprüche

1. Saugmodul (2) für eine Handwerkzeugmaschine (1) mit
einem motorgetriebenen Lüfterrad (17),
einem Ansaugkanal (21) zum Ansaugen von staubbeladener Luft,
einem Sammelbehälter (23) für Staub und
einem Durchflusssensor (24), der eine aus Kunststoff gebildete Sensorfläche (25), welche in dem Ansaugkanal (21) angeordnet ist, einen der Sensorfläche (25) zugewandtem Elektrofeldmeter (26) zum Bestimmen der elektro-statische Feldstärke an der Sensorfläche (25), und eine Auswertungseinheit (27) zum Bestimmen eines Durchflussmenge von staubbeladener Luft basierend auf der bestimmten elektrostatische Feldstärke aufweist.

2. Saugmodul (2) nach Anspruch 1 **gekennzeichnet durch** eine Warneinrichtung (29), die bei einem Abfall der Durchflussmenge ein Warnsignal (30) ausgibt, wenn der Abfall mit einer Änderungsrate erfolgt, die größer als eine vorgegeben Änderungsrate ist.

3. Saugmodul (2) nach Anspruch 1 oder 2 **gekennzeichnet durch** eine Anzeige (28) für die Durchflussmenge von Staub in dem Ansaugkanal (21).

4. Steuerungsverfahren für ein Saugmodul (2), mit dem Aufbau nach einem der Ansprüche 1 bis 3, **gekennzeichnet durch** die Schritte:
Bestimmen einer Feldstärke eines elektro-statischen Feldes an der Sensorfläche (25),
Ermitteln einer Durchflussmenge von Staub in dem Ansaugkanal (21) ansprechend auf die bestimmte Feldstärke,
Ausgeben eines Warnsignals (30) an eine Anzeige (28), wenn die Durchflussmenge schneller als eine vorgegeben Änderungsrate abfällt.
